# EUROPEAN PATENT APPLICATION

(11) **EP 1 469 459 A2**
(43) Date of publication of application: **20.10.2004**
(21) Application number: 04008794.2
(22) Date of filing: 13.04.2004
(51) Int. Cl.: G11B 5/86

(54) **Magnetic transfer master carrier**

(30) Priority: 14.04.2003 JP 2003108936
(71) Applicant: Fuji Photo Film Co., Ltd., Kanagawa-ken (JP)
(72) Inventor: Tsubata, Hisashi, Odawara-shi Kanagawa-ken (JP)
(74) Representative: HOFFMANN - EITLE

(57) **Abstract**

Positioning portions (3c,4c) are provided on part of respective center holes (3b,4b) of master carriers (3,4) on the front (2c) and back (2b) sides of a magnetic disk medium (2). At the time of magnetic transfer, the master carriers are superimposed on the magnetic disk medium such that the master carriers sandwich the magnetic disk medium by matching the positioning portions to each other.

## Description

### BACKGROUND OF THE INVENTION

### Field of the Invention

The present invention relates to a magnetic transfer master carrier. Specifically, the present invention relates to a pair of magnetic transfer master carriers to transfer servo signals to the front and back sides of a magnetic disk medium having a magnetic disk layer on each side.

### Description of the Related Art

In general, with the increase in information content, inexpensive media having a large-capacity for recording a large amount of information and preferably providing so-called quick access capable of reading a required point within a short time are desired with regard to a magnetic recording medium. For example, high-density magnetic recording media which are flexible disks such as hard disks or ZIPs (Iomega Corporation) have been known. In these high-density magnetic recording media, information recording areas are constituted of narrow tracks. In order to accurately scan a narrow track width by a magnetic head and reproduce a signal at a high S/N, a so-called tracking servo technology plays an important role.

Servo information including servo signals for track positioning, address signals for the tracks, and reproduction clock signals need to be recorded beforehand as a pre-format on a magnetic recording medium when the magnetic recording medium is fabricated. Presently, the pre-formatting is performed using a dedicated servo recording device (servo track writer). When pre-formatting using the conventional servo recording device,. the information needs to be recorded on magnetic recording media one by one with a magnetic head, which takes a considerable period of time and causes a problem in terms of production efficiency.

Meanwhile, as a method of accurately and efficiently perform this pre-format, a method of transferring a pattern which is formed in a master carrier and which holds servo information to a magnetic recording medium by magnetic transfer is proposed in Patent Literatures 1, 2 and the like.

In magnetic transfer, a magnetization pattern corresponding to an information pattern owned by a master carrier is magnetically transferred to a slave medium by applying a transfer magnetic field in the state where the master carrier holding the information to be transferred is in tight contact with the magnetic recording medium (slave medium) such as a magnetic disk medium. Magnetic transfer has the following advantages: recording can be statically performed without changing the relative positions of the master carrier and the slave medium; accurate pre-format recording can be performed; and the time required for recording is extremely short.
Patent Literature 1
   Japanese Unexamined Patent Publication No. 63(1988)-183623
Patent Literature 2
   U.S. Patent Laid-Open No. 20020075583

Meanwhile, according to servo writing using the conventional dedicated servo writer, servo signals are written with heads provided on the front and back sides of the disk, the heads being made to face each other while the disk sandwiched therebetween. Accordingly, the positions of sectors allocated in a circumferential direction on the front and back sides are matched to each other. However, when a master carrier is used for transfer, it is extremely difficult to allow signal positions on the front and back master carriers to be matched in any cases of single-side sequential transfer and double-side simultaneous transfer.

When the signal positions on the front and back sides are not matched to each other, scan time from one side to the other (from the front side to the back side, or from the back side to the front side) in actual use of the disk is longer than that when the signal positions on the front and back sides are matched to each other.

Meanwhile, when performing the double-side simultaneous transfer on a portable disk medium, projections/recesses of a projected/recessed pattern formed on one of the master carriers may appear on the other side of the slave medium when the master carriers are brought into tight contact with both sides of the portable disk medium. In other words, if projected/recessed patterns pressed on the both sides of the slave medium are located at the same position on one side and the other side of the slave medium, the projected/recessed patterns influence each other, and in some cases deteriorate the tightly contacting property between the master carrier and slave medium.

### SUMMARY OF THE INVENTION

In light of the aforementioned circumference, an object of the present invention is to provide a magnetic transfer master carrier capable of transferring servo signals to a desired position on front and back sides of a magnetic disk medium when transferring the servo signals thereto.

A magnetic transfer master carrier of the present invention is a pair of magnetic transfer master carriers including a front master carrier and a back master carrier for magnetically transferring servo signals to each of a front side and a back side of a magnetic disk medium,
wherein a positioning portion is provided on each of the front master carrier and the back master carrier, the positioning portion showing a transfer position on the front side and the back side of the magnetic disk medium to each of which the servo signals are to be transferred.

The positioning portion may be a mark, a cut-out portion, a notch, a protruded portion or the like. The positioning portion may be provided on the same positions or positions different from each other on the front and back master carriers as long as predetermined portions on the front and back master carriers can be matched to each other. Moreover, the positioning portion may be provided on any part of the inner and outer circumferences of the master carrier.

Note that a similar positioning portion may be also provided on a magnetic disk medium, a slave medium used at the time of magnetic transfer using the aforementioned magnetic transfer master carrier of the present invention.

The magnetic transfer master carrier according to the present invention has a positioning portion showing transfer positions on the front and back sides of the magnetic disk medium to each of which servo signals are to be transferred. Accordingly, the front and back master carriers can be easily positioned at the time of magnetic transfer.

Therefore, if a positioning portion is provided on the front and back master carriers such that the positions of the sectors, which are allocated in a circumferential direction on the front and back sides of the magnetic disk medium as the slave medium, are matched to each other, it is possible to obtain a magnetic disk medium in which the sectors on the front and back sides are matched to each other. In this case, the scan time from one side to the other side of the disk medium at the time of recording/reproduction can be made equivalent to that in the case of recording with a servo writer.

In a case where the magnetic disk medium is a flexible medium, the positioning portions are provided such that the projected/recessed patterns on the front and back master carriers are not matched to each other. Thus, it is possible to prevent insufficient contact between the magnetic disk medium and the master carriers at the time of double-side simultaneous magnetic transfer.

If a similar positioning portion is provided on the magnetic disk medium, it is possible to accurately position the magnetic disk medium and the master carriers at the time of magnetic transfer. Accordingly, it is possible to suppress that the servo track center deviates from the center of the magnetic disk medium due to misalignment of the magnetic disk medium with the master carriers.

### BRIEF DESCRIPTION OF THE DRAWINGS

Figure 1 is a perspective view showing master carriers according to a first embodiment of the present invention and a slave medium thereof.
Figures 2A and 2B are plan views showing the master carriers according to the first embodiment of the present invention and the slave medium thereof.
Figure 3 is a perspective view showing main parts of a magnetic transfer device.
Figures 4A to 4C are views showing a basic process of a magnetic transfer method.
Figure 5 is a plan view showing a modified example of the master carrier according to the first embodiment.
Figures 6A and 6B are plan views showing master carriers according to a second embodiment of the present invention and a slave medium thereof.

### DETAILED DESCRIPTION OF PREFERRED EMBODIMENTS

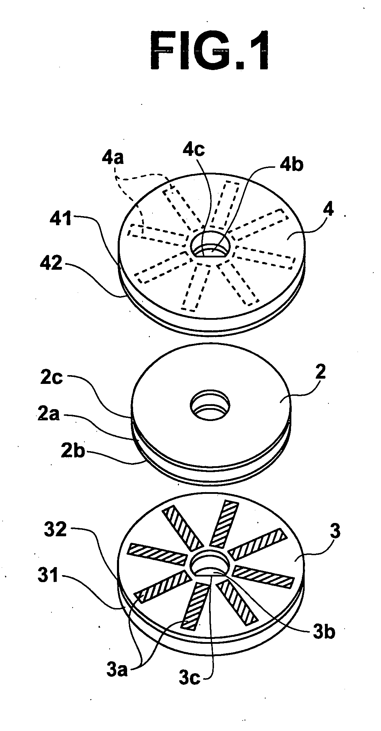

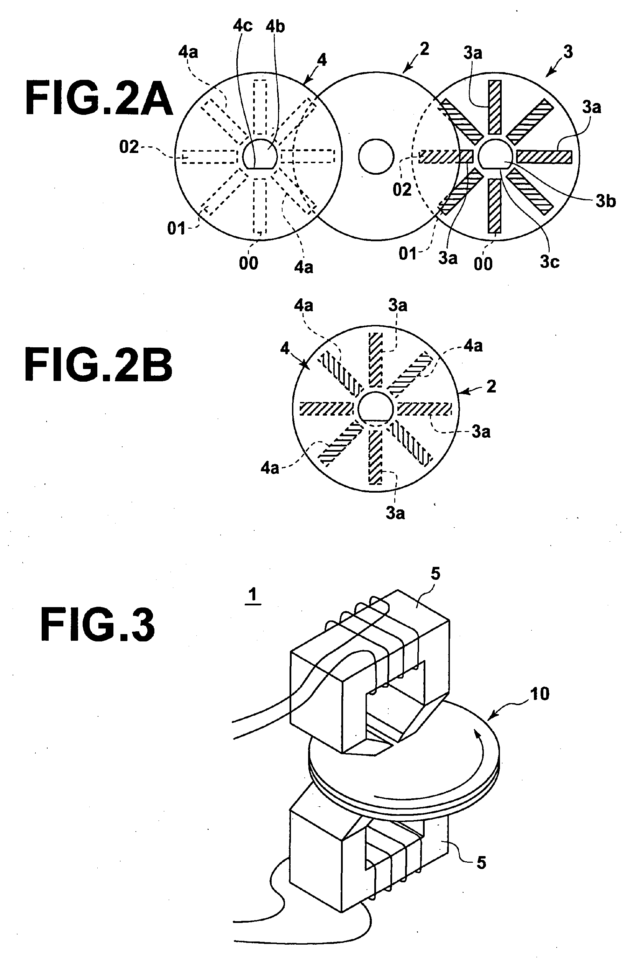

Hereinafter, a detailed description will be given of embodiments of the present invention. Figure 1 is a perspective view showing master carriers 3 and 4 of a first embodiment of the present invention and a slave medium 2, and Figure 2 is a plan view showing the master carriers 3 and 4 of the first embodiment and the slave medium 2.

As shown in Figure 1, the slave medium 2 to be subjected to magnetic transfer using the master carriers 3 and 4 of the present invention is a disk-shaped magnetic recording medium such as a hard disk or a flexible disk with magnetic recording layers (magnetic layers) 2b and 2c formed on the both surfaces of a disk-shaped substrate 2a.

The respective master carriers 3 and 4 of the present invention are formed in a disk shape and include a transfer information carrying surface on one side thereof, on which finely projected/recessed pattern is formed due to its magnetic layer. The surface opposite to the transfer information carrying surface is held by tight contact means (not shown), and the master carriers 3 and 4 are brought into tight contact with the magnetic layers of the slave medium. The master carriers 3 and 4 shown in Figure 1 have projected/recessed patterns on the surfaces thereof according to information recorded on the lower recording layer 2b and the upper recording layer 2c of the slave medium 2. The master carriers 3 and 4 are constituted of substrates 31 and 41 having projected/recessed patterns thereon and soft magnetic layers 32 and 42 formed on the substrates 31 and 41, respectively.

Figures 2A and 2B are plan views showing a positional relationship between the master carriers 3 and 4 and the slave medium 2: Figure 2A showing the master carriers 3 and 4 and the slave medium 2 before superimposed on each other; and Figure 2B showing the same after superimposed on each other. The top master carrier 4 on the front side of the slave medium 2 includes a plurality of servo regions 4a formed at predetermined angular spaces on the back side thereof, and the bottom master carrier 3 on the back side of the slave medium 2 includes a plurality of servo regions 3a formed at predetermined angular spaces on the front side thereof. The servo region 3a is shaded in order to facilitate differentiation between the servo regions 4a and 3a.

These servo regions 3a and 4a are schematically shown as eight servo regions formed while equally spaced. In the servo regions 3a and 4a, a finely projected/recessed pattern (not shown) is formed in each track according to information signals. In each track, this projected/recessed pattern is provided in the track length direction so as to represent, for example, a clock signal, a servo signal, and an address information signal.

The inner circumferential surface of center holes 3b and 4b of the master carriers 3 and 4 is made flat at a position corresponding to a region indicating a sector 00 among the servo regions. Specifically, line portions 3c and 4c are formed in part of the center holes 3b and 4b to constitute positioning portions in the plan view.

When the master carriers 3 and 4 are brought into tight contact with the back side (herein, the magnetic layer 2b side) and the front side (herein, the magnetic layer 2c side) of the slave medium 2, respectively, the master carriers 3 and 4 are superimposed on the slave medium 2 such that the line portions 3c and 4c of the respective center holes, the positioning portions of the master carriers 3 and 4, are aligned to make the positions of the sectors be matched to each other on the front and back sides of the slave medium 2, as shown in Figure 1 and Figures 2A and 2B. That is, the positions of sectors 00, 01, 02... are matched to each other on the front and back sides of the slave medium 2. Here, the positioning is easy because the positioning portions are provided, and thus a magnetic recording medium on which the positions of the sectors are matched to each other on the front and back sides thereof can be easily obtained.

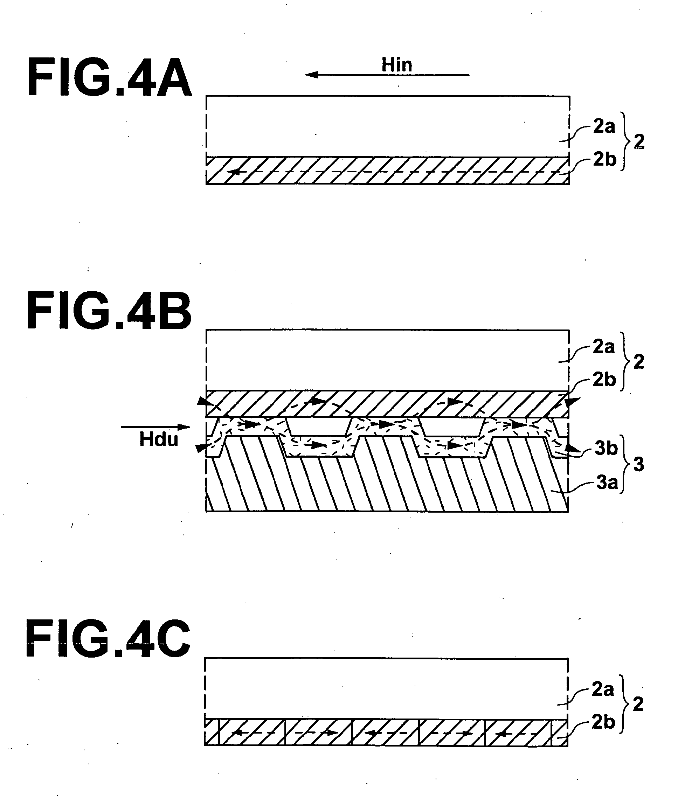

Next, a brief description will be given of a magnetic transfer device and a magnetic transfer method for magnetic transfer using the aforementioned magnetic transfer master carrier of the present invention. Figure 3 is a perspective view of main parts of the magnetic transfer device, and Figures 4A to 4C are views showing a basic process of magnetic transfer.

The magnetic transfer device 1 shown in Figure 3 includes an electromagnet unit 5 and rotating means (not shown) disposed between upper and lower magnets 5a and 5b of the electromagnet unit 5. The rotating means rotates a disk-shaped holder 10 in a direction indicated by the arrow. The disk-shaped holder 10 holds the aforementioned slave medium 2 and the master carriers 3 and 4 inside while being in tight contact with each other. The slave medium 2 is subjected to initial magnetization in one of the track directions in advance.

A transfer magnetic field is applied by the electromagnet unit 5 disposed on the top and bottom of the holder 10 while the holder 10 is rotated by the rotating means (not shown), whereby the information carried on the master carriers 3 and 4 is magnetically transferred to be simultaneously recorded on both sides of the slave medium 2.

A description will be given of the basic process of magnetic transfer with reference to Figures 4A to 4C. Figure 4A shows a step of initial DC magnetization of the slave medium by applying a magnetic field in one direction, Figure 4B shows a step of applying a transfer magnetic field in the opposite direction to the initial DC magnetic field while the master carriers are brought into tight contact with the slave medium, and Figure 4C shows a state after the magnetic transfer. In Figures 4A to 4C, concerning the slave medium 2, only the bottom recording layer 2b side is shown, and a description will be given only of magnetic transfer to the bottom recording layer 2b. However, the same is true for the top recording layer 2c.

As shown in Figure 4A, the magnetization of the recording layer 2b is aligned in one direction beforehand by applying an initial DC magnetic field Hin to the slave medium 2 in one of the track directions. Subsequently, as shown in Figure 4b, the surface on the recording layer 2b side of the slave medium 2 and the soft magnetic layer 32 on the surface of a projected portion of the master carrier 3 are brought into tight contact with each other, and a transfer magnetic field Hdu in the opposite direction to the initial DC magnetic field Hin (i.e. the opposite direction to the initial DC magnetization) is then applied for magnetic transfer. Consequently, as shown in Figure 4C, a magnetized pattern is transferred in accordance with the projected/recessed pattern of the magnetic layer of the master carrier 3 to be recorded on the recording layer 2b of the slave medium 2.

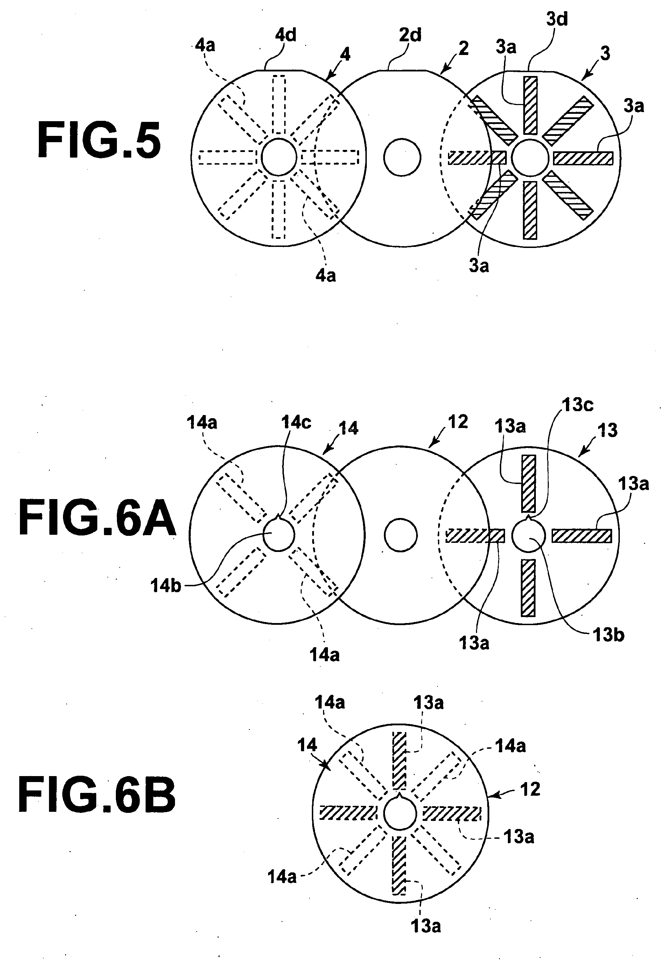

The positioning portion formed in the master carrier is not limited to the aforementioned embodiment, and may be cut-out portions 3d and 4d on part of the respective outer circumferences of the front and back master carriers 3 and 4 as shown in Figure 5. Alternatively, part of the outer circumferences may be protruded to be the positioning portions. Furthermore, as shown in Figure 5, in addition to the positioning portions on the front and back master carriers 3 and 4, a positioning portion 2d may be provided on the slave medium 2. This helps positioning the master carriers and the slave medium at the time of magnetic transfer. Moreover, it is possible to match the positions of the sectors on the front and back sides of the slave medium 2 even when the one-side sequential transfer is performed.

The positioning portion is not limited to a cut-out portion on an inner or outer circumference, a hole, and a protruded portion, and may be a mark provided on the front, back, or side surface of the master carrier. Moreover, the positioning portion may be anything that is visible or mechanically, optically, or electrically detectable. In this case, the front and back master carriers are positioned by utilizing the mark.

Furthermore, positioning is not only for matching the sectors on the front and back of the slave medium, and may be performed according to various requests.

Figures 6A and 6B are plan views showing a positional relationship between master carriers 13 and 14 according to a second embodiment of the present invention and a slave medium 12. Figure 6A shows the master carriers 13 and 14 and the slave medium 12 before stacked on each other, and Figure 6B shows the master carriers 13 and 14 and the slave medium 12 after stacked on each other. The top master carrier 14 on the front side of the slave medium 12 includes a plurality of servo regions 14a formed at predetermined angular intervals on the back side thereof, and the bottom master carrier 13 on the back side of the slave medium 12 includes a plurality of servo regions 13a formed at predetermined angular intervals on the top side thereof. The drawings schematically show four servo regions formed at regular intervals on each master carrier. The servo region 13a is shaded in order to facilitate differentiation between the servo regions 13a and 14a.

Herein, the slave medium 12 is assumed to be a portable medium. When projected/recessed patterns indicating information born by the servo regions 13a and 14a are pressed so as to be brought into contact with the slave medium 12, projected portion on the servo regions 13a and 14a formed in finely projected/recessed patterns presses the slave medium 12 and sometimes has an influence on a side of the slave medium 12 opposite to the pressed side. Accordingly, if the servo regions 13a and 14a press the slave medium 12 at the same positions on the front and back sides, projections/recesses in the projected/recessed patterns interfere with each other, and the slave medium 12 may not be brought into tight contact with the projected/recessed patterns.

Accordingly, as shown in Figure 6A, the master carriers 13 and 14 of the present embodiment include positioning potions to position the master carriers 13 and 14 such that the four servo regions 14a on the top master carrier on the front side of the slave medium 12 are diagonally arranged to form an "x" shape and the four servo regions 13a on the bottom master carrier on the back side of the slave medium 12 are horizontally and vertically arranged to form a "+" shape. In this embodiment, center holes 13b and 14b of the master carriers 13 and 14 are designed to have notches 13c and 14c on part of the circumferences thereof, thus forming the positioning portions.

As shown in Figure 6B, when the slave medium 12 is sandwiched between the two master carriers 13 and 14, the master carriers 13 and 14 are stacked such that the servo regions 13a and 14a are not matched to each other. If the servo regions 13a and 14a are circumferentially disaligned when the master carriers are brought into tight contact with the front and back sides of the portable slave medium 12, it is prevented that the front and back master carriers influence each other at the time of magnetic transfer. That is, even if the back side of the slave medium 12 (the side opposite to the side in contact with the projected/recessed pattern) is deformed due to the projected/recessed pattern on one of the master carriers, the projected/recessed patterns on the two master carriers do not influence each other, since the projected/recessed pattern on the other master carrier is not pressed to the position on the back side corresponding to the position to which the above pattern is pressed. Therefore, favorable tight contact between the slave medium 12 and the master carriers 13 and 14 is secured.

Thus, it is preferable that the front and back master carriers be positioned such that the servo regions on the front and back master carriers are disaligned if the slave medium is a portable medium. The master carrier according to the present invention will facilitate such positioning.

## Claims

1. A pair of magnetic transfer master carriers including a front master carrier and a back master carrier for magnetically transferring servo signals to each of a front side and a back side of a magnetic disk medium,
wherein a positioning portion is provided on each of the front master carrier and the back master carrier, the positioning portion showing a transfer position on the front side and the back side of the magnetic disk medium to each of which the servo signals are to be transferred.
